Europäisches Patentamt

European Patent Office

Office européen des brevets

(19)

(11) Veröffentlichungsnummer: **0 173 069**
**B1**

## (12) EUROPÄISCHE PATENTSCHRIFT

(45) Veröffentlichungstag der Patentschrift:
**10.01.90**

(51) Int. Cl.⁴: **C 05 D 9/02**

(21) Anmeldenummer: **85109125.6**

(22) Anmeldetag: **22.07.85**

(54) **Mehrspurennährstoffdünger.**

(30) Priorität: **28.07.84 DE 3427980**

(43) Veröffentlichungstag der Anmeldung:
**05.03.86 Patentblatt 86/10**

(45) Bekanntmachung des Hinweises auf die Patenterteilung:
**10.01.90 Patentblatt 90/2**

(84) Benannte Vertragsstaaten:
**DE FR GB IT SE**

(56) Entgegenhaltungen:
**EP-A- 0 053 246**
**FR-A- 1 590 621**
**FR-A- 1 590 622**
**FR-A- 2 068 136**
**FR-A- 2 222 331**
**FR-A- 2 355 814**
**GB-A- 803 052**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,
Carl-Bosch-Strasse 38, D-6700 Ludwigshafen (DE)**

(72) Erfinder: **Jungbauer, Anton, Dr., Schifferstadter
Strasse 29, D-6701 Waldsee (DE)**
Erfinder: **Leutner, Bernd. Dr., Taunusstrasse 17,
D-6710 Frankenthal (DE)**
Erfinder: **Juergens, Geerd Friedrich, Dr.,
Robert-Schumann-Strasse 27, D-6707 Schifferstadt (DE)**

## Beschreibung

Die vorliegende Erfindung betrifft einen Mehrspurenstoffdünger, in dem die Spurenelemente Fe, Mn, Zn, Cu, Co und Ni überwiegend in Form ihrer anionischen Chelatverbindungen mit einer oder mehreren Polyaminocarbonsäuren vorliegen, sowie ein Verfahren zur Herstellung derselben.

Pflanzen benötigen neben der Düngung mit den bekannten Hauptnährungstoffen für eine optimale Entwicklung auch die Zufuhr der Spurenelemente Eisen (Fe), Mangan (Mn), Zink (Zn), Kupfer (Cu), Cobalt (Co), Nickel (Ni), Bor (B) und Molybdän (Mo). Diese Spurenelemente werden zum Aufbau von Enzymsystemen in den pflanzlichen Zellen benötigt. Unterbleibt die Zufuhr auch nur eines der genannten Spurenelemente oder ist diese zu gering, so treten Mangelkrankheiten an der Pflanze auf.

Bei der heutigentags üblichen intensiven Anbautechnik benötigen Kulturpflanzen erhöhte Mengen an Spurennährstoffen. Eine ungenügende Nachlieferung an ertragsbildenden Spurennährstoffen zur Zeit erhöhten Bedarfs löst Mangelerscheinungen aus.

Bekannt ist z. B. die durch Eisenmangel hervorgerufene Chloroseerkrankung der Pflanzen. Sie lässt sich beheben, indem man der Pflanze über das Blatt oder die Wurzel die fehlenden Eisenionen zuführt. Als besonders wirksam haben sich hierbei Eisenchelatkomplexe der Polyaminopolycarbonsäuren, z. B. der Ethylendiamintetraessigsäure, der Diethylentriaminpentaessigsäure oder der Hydroxyethylethylendiamintriessigsäure, erwiesen. Auch die Chelatkomplexe mit anderen Spurenelementen weisen eine bessere Wirkung auf als die einfachen anorganischen Salze (vgl. z. B. S. Chabarek und A. Martell, Organic Sequesterings Agents, John Wiley and Sons, Inc. 1959, S. 455 bis 469 oder DE-PS 945 847).

Aus diesen Gründen werden zur Behebung der durch Spurennährstoffmangel hervorgerufenen Pflanzenschäden oder vorsorglich zur Verhinderung solcher Mangelerkrankungen und damit zur Ertragssteigerung in der Landwirtschaft derartige Metallchelate eingesetzt (siehe A. Finck, Dünger und Düngung, Verlag Chemie, Weinheim 1979, S. 93 bis 137).

Im wissenschaftlich-technischen Schrifttum sind Mehrspurennäherstoffdünger in fester, flüssiger und pastöser Form beschrieben. Vom Handel werden allerdings praktisch ausschliesslich feste Mehrspurennährstoffdünger angeboten. Flüssige Dünger dieser Art konnten sich bislang nicht durchsetzen, weil die bekannt-gewordenen, lagerstabilen Produkte mit nur 5 bis 25% Feststoffgehalt zu wenig konzentriert waren.

Die festen und flüssigen Mehrspurennährstoffdünger lassen sich nach im Prinzip gleichartigen Verfahren gewinnen. Bei den Flüssigdüngern kann man allerdings den Trockenschritt bei der Herstellung einsparen. Ursprünglich wurden die in getrennten Arbeitsgängen hergestellten Einzelchelate, wie z. B. das Na $[Fe(EDTA)] \cdot xH_2O$, das Mg $[Zn(EDTA)] \cdot xH_2O$ und das $Na_2[Cu(EDTA)] \cdot xH_2O$ (x = $1^2$bis 3, EDTA = Ethylendiamintetraacetat) gemischt. Die Herstellung von Mehrspurensystemen durch Mischen der getrennt herzustellenden Einzelchelate ist aber nicht besonders wirtschaftlich und wird daher kaum mehr praktiziert.

Weniger aufwendig lassen sich solche Mehrspurendünger z. B. nach DE-PS 2 313 912 durch Vermischen von wasserlöslichen Salzen des Magnesiums und der Spurenelemente mit den Natrium- bzw. Kaliumsalzen der Polyaminopolycarbonsäuren herstellen. Nachteilig wirkt sich allerdings bei diesen Mischungen der relativ geringe Anteil an Spurennährstoffen aus, bedingt durch den hohen Anionengehalt.

Die nach den zwei beschriebenen Verfahren herstellbaren festen Spurennährstoffdünger weisen ausserdem noch weitere Nachteile auf. Einmal besteht die Gefahr der Entmischung bei Salzmischungen unterschiedlicher Körnung und Dichte. Ausserdem können Verbackungserscheinungen auftreten, die durch Reaktion zwischen den Komplexbildnern und den meist in hydratisierter Form eingesetzten Metallsalzen hervorgerufen werden. Ferner können die in den eingesetzten Salzen mit technischer Reinheit in geringer Menge enthaltenen schwerlöslichen Verunreinigungen zu Düsenverstopfungen beim Versprühen der Spurenelementlösung führen.

Besser lassen sich Mehrspurennährstoffdünger nach DE-PS 3 044 903 aus Metalloxiden, Polyaminopolycarbonsäuren und mindestens 50 Äquivalent-% basischen Magnesiumverbindungen, wie z. B. MgO herstellen. Die entstehenden Lösungen enthalten dann überwiegend Mg-haltige Chelate, wie z. B. Mg $[Cu(EDTA)] \cdot xH_2O$, Mg $[Zn(EDTA)] \cdot xH_2O$ oder Mg $[Mn(EDTA)] \cdot xH_2O$ (x = 1 bis 3, EDTA = Ethylendiamintetraacetat).

Nachteilig wirkt sich bei diesem Verfahren die geringe Löslichkeit der aufgeführten Spurenelemente aus. Bei 90°C lösen sich nämlich – in Abhängigkeit von der Zusammensetzung der Spurenelementmischung – nur ca. 30 bis 35% in Wasser, so dass beim Aufarbeiten dieser Lösungen zu festen Produkten (z. B. durch Sprühtrocknen) erhebliche Wassermengen verdampft werden müssen. Ferner führt die starke Temperaturabhängigkeit der Löslichkeit von Mg- und Na-Spurenelement-Polyaminopolycarboxylaten leicht zu Fertigungsproblemen bei der Synthese, da schon bei geringfügigen Temperaturabsenkungen Produkt aus den Ansätzen ausfällt. Folgen sind z. B. Anbackungen, Verstopfungen bei der Filtration oder Konzentrationsänderungen in den Produkten wegen unterschiedlicher Auskristallisation der verschieden gut löslichen Chelatkomponenten.

Weiterhin ist aus FR-A 1 590 622 und FR-A 1 590 621 bekannt, Spurendement-chelat-Komplexe durch Umsetzen von Spurenelementsalzen mit den Ammonium- oder Kalinensalzen von Polyaminopolycarbonsäuren herzustellen und derartige Produkte als Düngemittel zu verwenden.

Für eine problemlose Vermarktung von Mehrspurennährstoffdünger-Lösungen ist eine Kristallisationsstabilität der Lösungen bis hinab zu 0 °C oder noch besser bis etwa −10 °C wegen der eventuellen Lagerung bei Frosteinwirkung erforderlich. Gleichzeitig sollte jedoch der Feststoffgehalt dieser Lösungen mindestens 30 Masse-% betragen. Solche Spurenelementchelatlösungen sind aber bislang nicht bekannt. Mg-Spurenelementchelate lösen sich bei Raumtemperatur etwa zu 20 Masse-% in Wasser; Na [Fe(EDTA)] $\cdot xH_2O$ (EDTA = Ethylendiamintetraacetat, x = 1 bis 3) gar nur zu ca. 15 Masse-%. Bei tieferen Temperaturen ist die Löslichkeit noch geringer. Dies hat dazu geführt, dass bislang den festen Spurennährstoffdüngern der Vorzug gegeben wird, und flüssige Mehrspurennährstoffdünger sich nicht durchsetzen konnten.

Flüssige Spurennährstoffdünger weisen Festprodukten gegenüber eine Reihe von Vorteilen auf. Die wichtigsten seien kurz angeführt: Einsparung der energieaufwendige Eindampfung, keine Entmischungs- und Verbackungstendenz, bei den fertigen Düngern einfache Dosierung und Vermeidung von Schwierigkeiten beim Auflösen der festen Produkte, wie z. B. Düsenverstopfungen durch unlösliche bzw. unvollständig gelöste Produkte oder Staubentwicklung beim Füllen der Spritzgeräte mit pulverförmigen Spurendüngern.

Der vorliegenden Erfindung lag daher die Aufgabe zugrunde, einen Mehrspurennährstoffdünger anzugeben, der mit Polyaminopolycarbonsäuren chelatisierte Spurenelemente aus der Gruppe, Fe, Mn, Zn, Cu, Co, Ni enthält, sowie ein Verfahren zu dessen Herstellung bereitzustellen, wobei die Chelatkomplexe in diesem gegenüber den bisher bekannten Mehrspurennährstoffdüngern im Temperaturbereich von −10 bis +100 °C eine deutlich bessere Wasserlöslichkeit aufweisen und im übrigen die an sie gestellten Forderungen bezüglich Wirksamkeit und Pflanzenverträglichkeit voll erfüllen.

Die Aufgabe wird erfindungsgemäss durch den Gegenstand des Anspruchs 1 gelöst. Die erfindungsgemässen Produkte lösen sich überraschenderweise bis zu 70 Masse-% in Wasser. Im folgenden wird mit EDTA das vierfach negativ geladene Anion der Ethylendiamintetraessigsäure (= $H_4$ EDTA) abgekürzt. Eine gesättigte Lösung von K [Fe(EDTA)]$\cdot xH_2O$ (x = 1 bis 3) enthält z.B bei 0 °C etwa 7 Masse-% Fe, eine entsprechende Na [Fe(EDTA)]-Lösung dagegen nur 1,3 Masse-% Fe. $K_2[Mn(EDTA)]\cdot xH_2O$ (x = 1 bis 3) löst sich zu ca. 60 Masse-% in Wasser von 0 °C, $Na_2[Mn(EDTA)]\cdot xH_2O$ nur zu 30 Masse-% und Mg $[Mn(EDTA)]\cdot xH_2O$ gar nur zu 10 Masse-%. Für die analogen Cu- und Zn-Komplexe liegen die Löslichkeiten ähnlich. Diese Angaben gelten aber nicht nur für die Ethylendiamintetraessigsäure, sondern auch für ähnliche Polyaminopolycarbonsäuren, wie z. B. Diethylentriaminpentaessigsäure oder die Hydroxyethylethylendiamintriessigsäure. Neben den genannten Spurenelementen können die erfindungsgemässen Spurenelementdünger auch Bor in Form von Borat und/oder Molybdän in Form von wasserlöslichen Molybdänverbindungen enthalten. Beide Spurenelemente liegen in Gegenwart von überschüssigem Chelatbildner komplexiert vor.

Magnesium und Calcium können als wasserlösliche Salze oder als Kalium-Mg- bzw. Kalium-Ca-Polyaminopolycarboxylate in den Spurenelementenmischungen enthalten sein. Diese Komplexe sind ähnlich gut wasserlöslich wie die entsprechenden Zn- oder Mn-Verbindungen.

Verzichtet man auf eine 100%ige Komlexierung der Spurenelemente, so kann der restliche Anteil der Spurenverbindungen aus wasserlöslichen anorganischen Salzen, wie z.B. Nitraten, Chloriden oder Sulfaten, bestehen.

Die Herstellung der Mehrspurennährstoffdüngemittel erfolgt erfindungsgemäss durch Umsetzung der Polyaminopolycarbonsäure in Gegenwart von Wasser mit Spurenelementverbindungen in einem Molverhältnis von Polyaminopolycarbonsäuren: Spurenelemente von mindestens 0,7:1 und gleichzeitiger oder anschliessender Zugabe von Alkali- und/oder Erdalkalioxiden, -hydroxiden oder -carbonaten und/oder Ammoniak zur Einstellung des pH-Wertes der Lösung auf Werte von 3,5 bis 8,0, mit der Massgabe, dass mindestens 70 Äquivalent-% der insgesamt erforderlichen alkalischen Verbindungen Kaliumverbindungen sind. Ein Molverhältnis Polyaminocarbonsäuren: Spurenelementen bzw. -verbindungen von 1:1 wird in der Regel nicht überschritten.

Als Spurenelementverbindungen werden Oxide, Hydroxide, Oxyhydroxide und Carbonate verwendet, da mit diesen Stoffen keine gehaltsbegrenzenden Anionen in die Mehrspurennährstoffdünger eingebracht werden.

Als chelatbildende Polyaminopolycarbonsäuren kommen insbesondere die Ni-trilotriessigsäure ($H_3NTA$), Hydroxyethylethylendiamintriessigsäure ($H_3$ HEDTA), Ethylendiamintetraessigsäure ($H_4EDTA$), Cyclohexan-1,2-diamintetraessigsäure ($H_4CDTA$) und die Diethylentriaminpentaessigsäure ($H_5DTPA$) in Betracht. Die Ethylendiamintetraessigsäure wird bevorzugt verwendet.

Gemäss einem weiteren Merkmal der Erfindung wird der pH-Wert der Spurenelementlösung auf einen pH-Wert von 3,5 bis 8,0 angehoben, indem man gleichzeitig oder nach beendeter Umsetzung der Polyaminopolycarbonsäuren mit den Spurennährstoffverbindungen der Reaktionslösung alkalische Kaliumverbindungen und eventuell alkalische Erdalkali- und/oder Natriumverbindungen bzw. Ammoniak zusetzt, mit der Massgabe, dass mindestens 70 Äquivalent-% der insgesamt erforderlichen Alkalien in Form von Kaliumverbindungen eingebracht werden. Als alkalische Kaliumverbindungen werden Hydroxide, Oxide und Carbonate verwendet. Die Erdalkali- bzw. anderen Alkaliverbindungen werden aus der gleichen Gruppe ausgewählt.

Die pH-Wert-Einstellung muss nicht nach beendeter Reaktion durchgeführt werden. Es ist auch möglich, diese während der Umsetzung durchzuführen oder vor der Reaktion ausreichend alkalische Verbindungen zuzusetzen, um den gewünschten End-pH-Wert zu erhalten. Selbstverständlich können auch anstelle der reinen Polyaminopolycarbonsäuren diese zumindest teilweise in Form ihrer entsprechenden Alkali-, speziell Kalium-, Erdalkali- oder Ammoniumsalze eingesetzt werden, so dass auf eine Neutralisation der während der Synthese entstehenden sauren Komplexe ganz oder teilweise verzichtet werden kann. Auch hierbei müssen mindestens 70 Äquivalent-% der insgesamt erforderlichen Alkalien in Form von Kaliumverbindungen eingebracht werden.

Die Darstellung der erfindungsgemässen Mehrspurennährstoffdünger führt man in Gegenwart von Wasser durch. Die Reaktionskonzentration der Syntheseansätze ist zweckmässigerweise so zu bemessen, dass eine gut rührbare Suspension bzw. Lösung entsteht. Praktisch haben sich Reaktantenkonzentrationen von 5 bis 80 Masse-%, vorzugsweise von 40 bis 60 Masse-%, bewährt. Niederigere Gehalte als 5 Masse-% sind gewöhnlich aus wirtschaftlichen Erwägungen weniger sinnvoll.

Die Umsetzungen zur Gewinnung der Mehrspurennährstoffdünger führt man in der Regel bei Temperaturen von 50 bis 150°C, bevorzugterweise oberhalb 80°C durch. Besonders bewährt hat es sich, die Synthese bei Siedetemperaturen unter Rückfluss vorzunehmen. Die Gesamtreaktionsdauer liegt dann zwischen etwa 10 und 200 min.

Nach beendeter Umsetzung erhält man – nach eventueller Filtration – eine Lösung, die entweder direkt als flüssiges Düngemittel verwandt oder durch Wasserentzug zum festen Spurenelementdünger aufgearbeitet werden kann.

In vorteilhafter Weise kann der Wasserentzug nach dem Verfahren des Sprühtrocknens oder der Sprühwirbeltrocknung durchgeführt werden. Mit Hilfe der Sprühwirbeltrocknung (= Sprühgranulierung) erhält man besonders gut wasserlösliche, rieselfähige und weitgehend staubfreie Produkte.

Der Wasserentzug muss natürlich nicht ausschliesslich über den Weg der Zerstäubungstrocknung erfolgen. Ebenfalls bewährt hat sich die Kristallisation durch Eindampfen mit anschliessendem Filtrieren oder Zentrifugieren und Trocknen. Diese Aufarbeitungsmöglichkeit kann auch in einem einzigen Verfahrensschritt durchgeführt werden. Geeignet dafür ist z.B. die Kristallisation in Dünnschichtverdampfern oder Schaufeltrocknern (Muldentrocknern), wobei zur schnelleren und schonenderen Trocknung auch im Vakuum gearbeitet werden kann.

Die Vielzahl der möglichen Verfahrenswege und -apparate zur Gewinnung von festen anorganischen Verbindungen aus wässrigen Lösungen gehören jedoch zum Stand der Technik. Sie brauchen deshalb hier nicht näher ausgeführt zu werden.

Um ein Festprodukt zu erhalten, das sich besonders schnell und leicht auflöst, hat es sich bewährt – unabhängig vom Trockenverfahren – den Wasserentzug bei einem Restwassergehalt von 4 bis 15 Masse-% abzubrechen.

Die durch Zerstäubungstrocknung gewonnene Spurenelement-Chelatmischungen sind nach Ergebnissen von Guinieraufnahmen röntgenamorph. Die durch eine langsamere Eindampfung erhaltenen Verbindungen sind hingegen kristallin und zeigen scharfe Linien in den Pulver-Röntgendiagrammen.

Die erfindungsgemässen Mehrspurennährstoffdünger eignen sich ausgezeichnet zur Versorgung von Pflanzen mit den Mikronährstoffen Fe, Cu, Mn, Zn, Co, Ni, B, Mo sowie mit K, Mg und Ca.

Mit besonderem Vorteil lassen sie sich zur Blattdüngung verwenden, da sie sich zum einen leicht in Wasser lösen und zum anderen gut über das Blatt aufgenommen werden. Die Mehrspurennährstoffdünger können deshalb zur Verhinderung und Ausheilung von Spurenelementmangelkrankheiten bei Pflanzen eingesetzt werden.

Die erfindungsgemässen Spurenelementdünger können in die in der Dünge- und Pflanzenschutztechnik üblichen Formulierungen, wie Lösungen, Suspensionen, Emulsionen, Pulver, Granulate oder Pasten, überführt werden. Selbstverständlich können diese Zubereitungsformen andere Düngerkomponenten, wie z.B. Harnstoff, Ammonnitrat, Borsäure, Netzmittel u.a., zugesetzt werden.

Der wesentliche Vorteil des erfindungsgemässen Spurelementdünger liegt in ihrer gegenüber den bekannten Spurenelementdüngern stark erhöhten Wasserlöslichkeit, was sich einerseits bei der Herstellung günstig auswirkt, da man in konzentrierteren Lösungen arbeiten kann, und demzufolge weniger Wasser verdampfen muss, wenn man aus den Lösungen die festen Düngemittel gewinnen will. Andererseits sind Lösungen dieser Düngemittel bei Konzentrationen bis zu etwa 60 Masse-% kristallisationsstabil, da auch bei Temperaturen bis herab zu 0°C das Löslichkeitsprodukt nicht überschritten wird.

Die Applikation erfolgt nach den in der Landwirtschaft und der Gartentechnik üblichen Methoden, also z.B. durch Giessen, direktes Einbringen in den Boden, Versprühen, Verstreuen, Verstäuben u.ä.

Die angewandte Menge an erfindungsgemässen Mehrspurennährstoffdünger kann in einem grossen Bereich variieren. Sie hängt stark ab von Bodenart, Pflanzentyp, Pflanzenzustand sowie Nährstoffbedarf der Pflanzen. Im allgemeinen liegen die Aufwandmengen an Spurendünger zwischen 0,1 und etwa 100 kg/ha, vorzugsweise aber zwischen 0,5 und 5 kg/ha.

Bei den in den nachfolgenden Beispielen angegebenen Prozentzahlen handelt es sich um Massen-%.

Beispiel 1

Zu 367,83 g Diethylentriaminpentaessigsäure, 21,85 g Eisen(III)-oxid (59,5% Fe), 19,87 g Kupfer(II)-oxid (75,5% Cu), 20,31 g Manganoxid (64% Mn), 20,00 g (Zinkoxid (75% Zn) in 230 g Wasser gibt man unter Rühren 250 g Kalilauge (45%). Die Mischung wird 1 Stunde lang bei 101°C gehalten. Anschliessend stellt man den pH-Wert des Ansatzes mit 71 g fester KOH auf 5,9 (40°C) ein. Die Lösung wird filtriert und das als Lösungsmittel dienende Wasser bei 60°C und 10 mbar bis auf einen Restgehalt von 3,1% entfernt.

Man erhält 590 g eines grünen Feststoffes. Gehalt: 2,2% Fe; 2,2% Mn; 2,5% Cu; 2,5% Zn; 20,0% K; 3,1% $H_2O$.

### Beispiel 2

In einer Mischung aus 1070 g Wasser und 1290 g Kalilauge (46%) werden bei 25°C unter Rühren 2020 g Ethylendiaminitetraessigsäure ($H_4$DEDTA), 101,5 g techn. Goethit (59,6% Fe), 33,8 g Kupferoxid (75,7% Cu), 209,5 g Manganoxid (64% Mn) und 241,5 g Zinkoxid (75% Zn) suspendiert. Der Ansatz wird 60 min lang unter Rückfluss gekocht, nach Abkühlung auf 70°C stellt man mit 232 g Kalilauge (46%) den pH-Wert des Ansatzes auf 6,0 ein und filtriert heiss (70°C). Die klare, dunkelgrüne Lösung ist bis −10°C kristallisationsstabil.

Ausbeute: 5200 g Lösung

Gehalte: 1,2% Fe; 0,4% Cu; 2,5% Mn; 3,7% Zn; 38% $EDTA^{4-}$; 8,7% K; 40% $H_2O$.

### Beispiel 3

50,5 kg Ethylendiamintetraessigsäure, 2,54 kg Eisenoxid (59,5% Fe), 0,85 kg Kupferoxid (75,7% Cu), 5,24 kg Manganoxid (64% Mn) und 6,04 kg Zinkoxid (75% Zn) werden unter Rühren in einer Mischung aus 26,75 kg Wasser und 38,25 kg Kalilauge (45%) suspendiert. Der Ansatz wird zum Sieden erhitzt und 2 Stunden lang gekocht. Anschliessend wird der pH-Wert der heissen Lösung (60°C) mit Kalilauge (45%) von 4,9 auf 6,1 eingestellt. Die Lösung wird filtriert und durch Sprühtrocknung zu 80 kg eines grünbeigen Feststoffs aufgearbeitet.

Gehalte: 1,7% Fe; 0,7% Cu; 3,7% Mn; 4,9% Zn; 14,5% K; 8,1% $H_2O$.

Schüttdichte: 0,60 kg/l.

### Beispiel 4

In einem dampfbeheizten 15 m³-Rührkessel werden 3000 kg Wasser und 2000 kg Kalilauge (45%) vorgelegt. Anschliessend suspendiert man darin unter Rühren 3542 kg Ethylendiamintetraessigsäure, 357 kg Eisenoxid (70% Fe), 266 kg Kupferoxid (75% Cu), 106 kg Manganoxid (66% Mn), 14 kg Cobaltoxid (74% Co) und 259 kg Zinkoxid (78% Zn). Der Ansatz wird auf Siedetemperatur erhitzt und 45 min lang bei 105°C gehalten. Dann kühlt man auf ca. 80°C ab und gibt zur pH-Werteinstellung auf pH = 5,0 480 kg Kalilauge (45%) zu. Die entstandene klare Lösung ist bis −10°C kristalisationsstabil.

Ausbeute: ca. 10 t

Gehalte: 2,5% Fe; 2,0% Cu; 0,7 Mn; 0,1% Co; 2,0% Zn; 7,8% K; 39% $H_2O$.

### Beispiel 5

In einem dampfbeheizten 15 m³-Rührkessel werden 3052 l Wasser und 1900 kg Kalilauge (46%), 3500 kg $H_4$EDTA, 413 kg Eisenoxid (60,5% Fe), 188 kg CuO, 243 kg Mn(OH)$_2$, 12,7 kg NiO, 300 kg Zinkcarbonat (50,5% Zn), 286 kg $H_3BO_3$ und 18,5 kg $(NH_4)_6Mo_7O_{24} \cdot 4H_2O$ suspendiert. Die Suspension wird zum Sieden erhitzt und 1 Stunde lang unter Rückfluss gekocht. Nach dem Abkühlen auf 80°C stellt man mit 25%igem Ammoniakwasser den pH-Wert von 4,8 auf 5,8 ein.

Man erhält ca. 10 t einer klaren dunkelgrünen Lösung.

Gehalte: 2,5% Fe; 1,5% Cu; 1,5% Mn; 0,1% Ni; 1,5% Zn; 0,5% B; 0,1% Mo; 6,3% K.

### Beispiel 6

In 600 kg Kalilauge (ca. 7%) werden folgende Einsatzstoffe suspendiert und zum Sieden erhitzt:

270 kg $H_4$EDTA, 21,5 kg Eisenoxid (69,7% Fe), 16,3 Kupferoxid (CuO). 15,5 kg MnO, 18,75 kg Zinkoxid (99,0% ZnO), 16,1 kg $B_2O_3$, 1,85 kg $(NH_4)_6Mo_7O_{24} \cdot 4H_2O$, 15,6 kg Mg(OH)$_2$ und 9,5 kg Calciumoxid (99,6% CaO). Der Ansatz wird zum Sieden erhitzt und 2 Stunden lang unter Rückfluss gekocht. Die klare, dunkelgrüne Lösung, deren pH-Wert 5,5 beträgt, ist bis −8°C kristallisationsstabil.

Ausbeute: ca. 950 kg

Gehalte: 1,5% Fe; 1,3% Cu, 1,2% Mn, 1,5% Zn; 0,5% B, 0,1% Mo; 2,9% K; 0,6% Mg, 0,6% Ca.

Ein Teil der Lösung wird durch Sprühwirbeltrocknung aufgearbeitet. Man erhält einen braunen, griessförmigen Feststoff mit einer mittleren Korngrösse von 2 mm.

Gehalte: 3,0% Fe; 2,7% Cu, 2,4% Mn, 3,0% Zn; 0,9% B, 0,18% Mo; 0,9% Mg, 0,9% Ca; 4,7% K; ca. 4% $H_2O$.

### Beispiel 7

In eine Mischung aus 48 kg Wasser und 12 kg Kalilauge (45%) werden bei 25°C unter Rühren der Reihe nach 4,0 kg Lepidokrokit (69,2% Fe), 28 kg $H_4$EDTA, 1,7 kg Kupferoxid (73% Cu), 2,7 kg MnCo$_3$ (47,6% Mn), 0,66 kg ZnO (76% Zn), 0,57 kg $H_3BO_3$ und 2,50 kg MgCO$_3$ eingetragen. Die entstehende Suspension mit einem pH-Wert von 4,9 wird 120 min lang unter Rückfluss gekocht, dann heiss (70°C) filtriert und anschliessend in einem Schaufeltrockner diskontinuierlich bei einem Unterdruck von 100 mbar getrocknet. Als Heizmedium für den Trockner wird 4,5-bar-Dampf verwendet. Die Wärmeaustauscherfläche beträgt 1,4 m², die Rotordrehzahl 15 min⁻¹.

Man erhält als Ausbeute 95 kg eines körnigen Produkts.

Gehalte: 5,0% Fe; 2,5% Cu, 2,5% Mn, 1,0% Zn; 0,15% B, 1,2% Mg; 7,1% K; 6,0% $H_2O$.

### Patentansprüche

1. Mehrspurennährstoffdünger, die die Spurenelemente Eisen, Mangan, Zink, Kupfer, Kobalt und Nickel in Form von anionischen Chelatverbindungen mit einer oder mehreren Polyaminopolycarbonsäuren enthalten, wobei mindestens 70 Mol% der Spurenelemente als Kalium-Spurenelement-Polyaminopolycarboxylat vorliegen, erhältlich durch Umsetzen der Oxide, Hydroxide, Oxyhydroxide oder Carbonate der Spurenelemente mit den Polyaminopolycarbonsäuren.

2. Mehrspurennährstoffdünger nach Anspruch 1, dadurch gekennzeichnet, dass sie in Form wässriger Lösungen vorliegen.

3. Verfahren zur Herstellung eines Mehrspurennährstoffdüngers nach Anspruch 1 und 2, dadurch gekennzeichnet, dass man die Polyaminopolycarbonsäuren in Gegenwart von Wasser mit den Oxiden, Hydroxiden, Oxyhydroxiden oder Carbonaten der Spurenelemente in einem Molverhältnis von Polyaminopolycarbonsäuren: Spurenelementen von mindestens 0,7:1 umsetzt und gleichzeitig oder anschliessend durch Zugabe von Alkali- und/oder Erdalkalioxiden, -hydroxiden oder -carbonaten und/oder Ammoniak den pH-Wert der Lösung auf Werte von 3,5 bis 8,0 einstellt mit der Massgabe, dass mindestens 70 Äquivalent-% der insgesamt erforderlichen alkalischen Verbindungen Kaliumverbindungen sind.

4. Verfahren zur Herstellung eines Mehrspurennährstoffdüngers nach Anspruch 3, dadurch gekennzeichnet, dass man die nach der Umsetzung erhaltene Lösung durch Entzug von Wasser durch Sprüh- oder Sprühwirbeltrocknung verfestigt.

## Claims

1. A multiple trace element fertilizer which contains the trace elements iron, manganese, zinc, cooper, cobalt and nickel in the form of anionic chelate compounds with one or more polyaminopolycarboxylic acids, wherein not less than 70 mol % of the trace elements are present as potassium trace element polyaminopolycarboxylate, obtainable by reacting the oxides, hydroxides, oxide hydroxides or carbonates of the trace elements with the polyaminopolycarboxylic acids.

2. A multiple trace element fertilizer as claimed in claim 1, which is in the form of an aqueous solution.

3. A process for the preparation of a multiple trace element fertilizer as claimed in claims 1 and 2, wherein the polyaminopolycarboxylic acids are reacted, in the presence of water, with the oxides, hydroxides, oxide hydroxides or carbonates of the trace elements in a molar ratio of polyaminopolycarboxylic acids to trace elements of not less than 0.7:1, and the pH of the solution is brought to 3.5–8.0 simultaneously or subsequently by the addition of alkali metal and/or alkaline earth metal oxides, hydroxides or carbonates and/or ammonia, with the proviso that not less than 70 equivalent percent of the total amount of alkaline compounds required are potassium compounds.

4. A process for the preparation of a multiple trace element fertiliser as claimed in claim 3, wherein the solution obtained after the reaction is converted into a solid form by removing water by spray-drying or spray granulation.

## Revendications

1. Engrais à plusieurs oligo-éléments, contenant les oligo-éléments fer, manganèse, zinc, cuivre, cobalt et nickel sous forme de chélates avec un ou plusieurs acides polyaminopolycarboxyliques, au moins 70% en moles des oligo-éléments se présentant sous forme de polyaminopolycarboxylate de potassium et d'oligo-élément, obtenu par réaction de l'oxide, hydroxyde, oxyhydroxyde ou carbonate de l'oligo-élément avec les acides polyaminopolycarboxyliques.

2. Engrais à plusieurs oligo-éléments, caractérisé en ce qu'ils se présentent sous forme de solutions aqueuses.

3. Procédé de préparation d'un engrais à plusieurs oligo-éléments selon les revendicaitons 1 et 2, caractérisé en ce qu'on fait réagir les acides polyaminopolycarboxyliques en présence d'eau avec les oxide, hydroxyde, oxyhydroxyde ou carbonate de l'oligo-élément dans un rapport molaire des acides polyaminopolycarboxyliques à l'oligo-élément d'au moins 0,7:1 et on amène en même temps ou ultérieurement le pH de la solution à une valeur de 3,5 à 8,0 par addition d'oxydes, hydroxydes ou carbonates alcalins et/ou alcalino-terreux et/ou d'ammoniac, pourvu qu'au moins 70% en équivalents des composés alcalins nécessaires au total soient des composés du potassium.

4. Procédé de préparation d'un engrais à plusieurs oligo-éléments selon la revendication 3, caractérisé en ce qu'on concentre la solution obtenue après la réaction par élimination d'eau par séchage par pulvérisation ou par pulvérisation tourbillonnaire.